# DEMANDE DE BREVET EUROPEEN

(11) **EP 0 802 019 A1**
(43) Date de publication de la demande: **22.10.1997**
(21) Numéro de dépôt: 97830158.8
(22) Date de dépôt: 01.04.1997
(51) Int. Cl.: B24B 21/00, B23Q 39/04

(54) **Machine polisseuse, lustreuse, ponceuse ou similaire à développement vertical**

(30) Priorité: 19.04.1996 IT BS960031
(71) Demandeur: Pulimetal Cittadini S.r.l., 25050 Provaglio d'Iseo (Brescia) (IT)
(72) Inventeur: Parzani, Francesco, 25050 Provaglio d'Iseo (Brescia) (IT)
(74) Mandataire: Manzoni, Alessandro

(57) **Abrégé**

II s'agit d'une machine polisseuse, lustreuse, ponceuse ou similaire développée en hauteur sur deux niveaux ou plus (11,12,13), dans laquelle des dispositifs de préhension (20), de manutention (24) et d'usinage (21,22,23) des pièces à polir, lustrer, poncer ou autre sont prévus.

## Description

L'invention présente intéresse le secteur des machines polisseuses, lustreuses, ponceuses ou similaires employant des organes de travail tels balais rotatifs, bandes abrasives et/ou autres ustensiles mobiles par rapport à la pièce à usiner, laquelle peut être diversement façonnée.

Ces machines possèdent habituellement plusieurs unités ou têtes de travail situées autour d'un plateau tournant portant des organes de préhension des pièces à usiner au niveau d'une station de chargement et de dépinçage des pièces usinées au niveau d'une station de déchargement. En partant de la station de chargement, le plateau tournant positionne en succession chaque pièce en face de chacune des unités de travail de façon à compléter le cycle d'usinage avant de relâcher la pièce au niveau de la station de déchargement. Le nombre d'unités de travail ainsi que les dimensions du plateau tournant peuvent varier en fonction des pièces et des opérations à accomplir dans un cycle d'usinage complet.

Toutefois, en l'état actuel de la technique, chaque machine est pourvue d'un seul plateau tournant, et les unités de travail positionnées autour de ce dernier ainsi que l'ensemble du dispositif se développent sur un plan essentiellement horizontal. Lorsqu'une installation requiert et comprend deux machines ou plus, ces dernières sont toujours placées sur le même plan, tout en maintenant chacune leur propre individualité, souvent juxtaposées et combinées avec des instruments intermédiaires de transfert des pièces d'une machine à l'autre.

En d'autres termes, chaque machine possède son propre appareil moteur et de contrôle, et les machines sont toutes ancrées et positionnées au sol, occupant ainsi un espace total horizontal correspondant à la somme des dimensions d'encombrement de chacune d'entre elles plus les espaces vides entre l'une et l'autre. Une telle disposition des machines implique ainsi l'occupation de vastes espaces de travail dans des locaux qui pourtant, possèdent normalement non seulement un certain développement horizontal, mais aussi un développement en hauteur souvent non négligeable. L'aménagement actuel est donc désavantageux aussi bien du point de vue logistique que du point de vue économique dès lors qu'il n'utilise que partiellement et d'une façon peu rationnelle les espaces à disposition et laisse inoccupés des espaces à des hauteurs pourtant accessibles et aisément utilisables.

L'invention présente vise à obvier à ces inconvénients et, dans ce but, elle présente une machine polisseuse, lustreuse, ponceuse ou similaire développée en hauteur sur deux niveaux ou plus et regroupant les unités de travail et les capacités de deux machines traditionnelles ou plus.

La machine ainsi proposée permet donc de mieux utiliser l'espace en hauteur et d'installer un nombre supérieur de machines à égalité de surface horizontale. De plus, les plateaux tournants situés à plusieurs niveaux pourront tous être actionnés à partir d'un seul appareil, être desservis par les mêmes groupes de chargement et de déchargement et gérés par un seul appareil de contrôle, avec les avantages de construction et de fonctionnement conséquents.

Les détails supplémentaires sur cette invention seront plus éloquents si nous poursuivons cette description en nous référant aux dessins en annexe, où:
la Fig. 1 représente d'une façon schématique une vue de côté d'un exemple de machine à développement vertical, et
la Fig. 2 représente, toujours d'une façon schématique, une vue en plan de la machine.

La machine proposée comprend au moins deux, trois plateaux tournants ou plus, 11, 12, 13, etc., coaxiaux et espacés en hauteur, et le même nombre de groupes d'unités ou têtes de travail 21, 22, 23, etc., situés autour de chacun des plateaux, le système partant d'une station de chargement 14 des pièces à usiner et allant jusqu'à une station de déchargement 15 des pièces usinées au niveau de chaque plateau tournant.

Par plateau tournant on entend donc un plateau proprement dit ou tout autre système de déplacement de forme circulaire, ovale ou autre forme géométrique.

Les unités de travail 21, 22, 23, etc. situées autour de chacun des plateaux tournants sont connues; elles peuvent être équipées suivant les besoins pour la réalisation d'opérations de polissage, lustrage, ponçage, etc., chaque unité étant mobile au moins dans la direction radiale par rapport au plateau tournant auquel elle est rattachée.

Les plateaux tournants 11, 12, 13, etc. sont montés sur un même support 16 et ont la possibilité de tourner de façon intermittente ou continue sur un axe vertical commun 17.

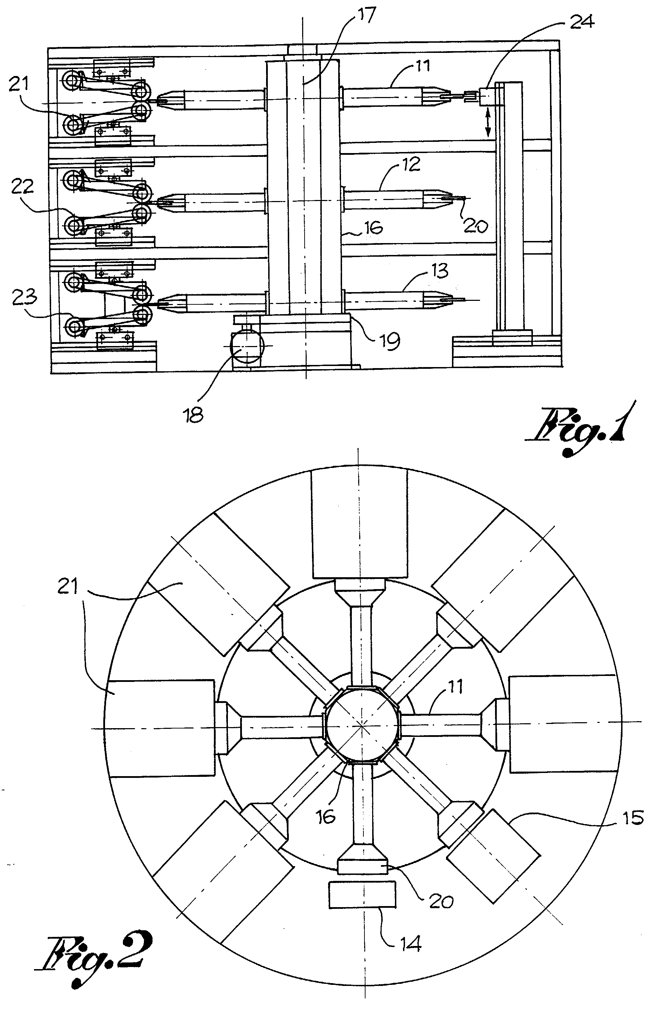

La rotation des plateaux et le verrouillage de ces derniers dans les différentes positions angulaires correspondant aux différentes unités de travail ainsi qu'aux stations de chargement et de déchargement, peuvent être commandés par un moto-réducteur 18 à travers une crapaudine 19 comme le montre la Fig. 1.

Chaque plateau supporte de façon connue des dispositifs à pince 20 de préhension des pièces à usiner au niveau de la station de chargement correspondante 14, et des organes de dépinçage des pièces après leur usinage de la part des unités de travail au niveau de la station de déchargement 15. On pourra également prévoir, au niveau de la station 15, un dispositif manipulateur 24 pour l'éloignement des pièces ou le transfert de ces dernières d'un plateau à l'autre.

La description ci-dessus met en évidence la compacité de la machine, qui occupe pratiquement, à l'horizontale, l'espace équivalent d'une seule machine traditionnelle, mais qui, se développant en hauteur, permet de monter et d'obtenir les performances de deux ou trois - voire même plus - machines traditionnelles en utilisant des espaces verticaux qui sont normalement inutilisés.

## Revendications

1. Machine polisseuse, lustreuse, ponceuse ou similaire caractérisée par un développement en hauteur sur deux niveaux ou plus, dans laquelle des dispositifs de préhension, de manutention et d'usinage des pièces à polir, lustrer, poncer ou autre sont prévus.

2. Machine polisseuse, lustreuse, ponceuse ou similaire conforme à la revendication 1, caractérisée par le fait qu'elle comprend deux, trois plateaux tournants (11, 12, 13, etc.) ou plus, coaxiaux, espacés en hauteur, tournant de façon intermittente ou continue et munis de dispositifs de préhension des pièces, chacun de ces plateaux tournants étant entouré de plusieurs unités ou têtes de travail (21, 22, 23, etc.), le système partant d'une station de chargement des pièces à usiner et aboutissant à une station de déchargement des pièces usinées; elle comprend également des dispositifs destinés à diriger la rotation intermittente desdits plateaux tournants et les mouvements des différentes unités de travail.

3. Machine polisseuse, lustreuse, ponceuse ou similaire dans laquelle les plateaux tournants coaxiaux (11, 12, 13, etc.) reposent sur un support unique dont la rotation est commandée par un appareil moteur (18) de façon à obtenir la rotation simultanée des plateaux.

4. Machine polisseuse, lustreuse, ponceuse ou similaire dans laquelle au moins la station de déchargement est équipée d'un dispositif manipulateur pour l'éloignement des pièces ou le transfert de ces dernières d'un plateau à l'autre.
